# EUROPEAN PATENT SPECIFICATION

(11) **EP 2 803 602 B1**
(45) Date of publication and mention of the grant of the patent: **14.10.2020**
(21) Application number: 14168700.4
(22) Date of filing: 16.05.2014
(51) Int. Cl.: B65F 3/00, B65F 3/24

(54) **Recyclable refuse collection vehicle**
Fahrzeug zum Sammeln von wiederverwertbarem Müll
Véhicule de ramassage de déchets recyclables

(30) Priority: 16.05.2013 GB 201308856
(43) Date of publication of application: 19.11.2014
(73) Proprietor: McKeown, John, County Offaly (IE)
(72) Inventor: McKeown, John, County Offaly (IE)
(74) Representative: Schütte, Gearoid

(56) References cited:
- DE-U1- 8 505 348
- DE-U1- 9 311 235
- JP-A- H 061 401

## Description

### Introduction

This invention relates to a recyclable refuse collection vehicle according to the preamble of claim 1, whereby a discharge assembly is used to unload collected refuse in a safe and convenient manner from the recyclable refuse collection vehicle.

Throughout this specification, the term "recyclable refuse" has been used and the term shall be understood to encompass any type of refuse which is collected for recycling, such as glass, metal beverage containers, plastics beverage containers, aluminium cans, paper items, cardboard containers and items, plastics items and the like.

It will be further understood that the type of recyclable refuse which the present invention is primarily directed towards will be recyclable refuse which is flowable in the sense that the recyclable refuse will be dimensioned so as to flow under gravity, without the need to tip or raise any portion of the refuse collection vehicle or its floor.

It will of course be understood that the vehicle described in this disclosure is equally applicable to other types of refuse and materials which are not necessarily recyclable. For example, food waste and non-recyclable materials, which are flowable in the same manner as the recyclable refuse mentioned above, are also deemed to be suitable for use with the vehicle and the use of the vehicle should not be limited to just recyclable refuse.

The detailed description of the present invention hereunder has been made with respect to glass being the recyclable refuse, as glass is considered to be one of the most difficult types of recyclable refuse to safely collect from a source location and unload at a refuse recycling plant. Recycling glass is also commercially attractive. Thus, without limiting the scope of the present invention, the primary commercial use for the present invention is envisaged to be the collection and safe unloading of refuse glass to be recycled. Although, as mentioned above, it will be readily appreciated and understood by a person of ordinary skill in the art that this invention could be used with other types of recyclable refuse which fulfil the same characteristics are outlined hereinabove. In particular, the present invention is also known to work effectively for the collection and subsequent unloading of food waste.

A kerbside recyclable refuse collection vehicle is known from the Applicant's own European Patent Application. European Publication Number EP 2 386 504 (M^{C}KEOWN) discloses a multi-compartment kerbside recyclable refuse collection vehicle. As can be seen from the prior art kerbside recyclable refuse collection vehicle, the collection and unloading of various types of recyclable refuse each suffer from different types of problems and issues.

In particular, the collection and unloading of glass suffers from a number of problems. For example, under the laws of the United Kingdom, there is an 85dB noise limit which a recyclable refuse vehicle operator may be subjected to during their work. As the collection and unloading of refuse glass can result in relatively high noise levels which could potentially exceed this threshold which has been set by health and safety regulations, solutions to minimise the noise levels which operators are subjected to are sought.

Moreover, glass often breaks and shatters during collection and unloading actions. The shattered and broken shards and pieces of glass are dangerous to handle and can damage the operator and/or machinery. In particular, tyres on the kerbside recyclable refuse collection vehicles can be susceptible to damage from shards of glass and/or pieces of broken glass.

Prior art solutions use glass refuse stillages which may be mounted onto the side of the kerbside recyclable refuse collection vehicles. As the glass refuse stillages can then be removed from the kerbside recyclable refuse collection vehicles for unloading of the glass refuse from the stillages, the glass refuse stillages can be brought clear of the kerbside recyclable refuse collection vehicle so that the glass refuse does not pose any threat to damaging the kerbside recyclable refuse collection vehicle during the discharging action. However, mountable glass stillages require an operator to wheel the stillage away from the kerbside recyclable refuse collection vehicle for the unloading process to be carried out. This is undesirable as an operator is forced to work in close proximity to the glass refuse during the discharging action which increases the chance of injury to the operator. Furthermore, it is a time consuming process to wheel the stillage away from the kerbside recyclable refuse collection vehicle for the unloading process to be carried out, and subsequently wheel the stillage back to the kerbside recyclable refuse collection vehicle for the stillage to be mounted on the kerbside recyclable refuse collection vehicle again.

Alternative refuse collection vehicles are known from the prior art and also suffer from undesirable design defects.

For example, Soviet Union Patent Publication Number SU804544 A1 (BAUMAN) discloses a standard refuse collection vehicle with a single refuse collection compartment. The single compartment has side walls that open completely to allow the refuse in the compartment to discharge from the refuse collection vehicle. The side walls are comprised of an upper and lower part. Each of the upper and lower parts runs along the length of the side of the compartment. The upper part and lower part are locked together to form a side wall of the compartment by using a lock located intermediate the top of the side wall and the bottom of the side wall. The upper part is hinged along its upper side and the lower part is hinged along its lower side. In this manner, the lower part rotate outwardly and downwardly. An articulated floor is used to assist in discharging the refuse by moving the floor from a substantially horizontal orientation to an angled orientation to urge the refuse out of the refuse collection vehicle. The problem with this type of known prior art is that the refuse collection vehicle must be used in conjunction with refuse receiving channels located either side of the refuse collection vehicle. This can be seen in the Figure of Soviet Union Patent Publication Number SU804544 A1. If these channels did not exist then the refuse would build up either side of the refuse collection vehicle and the refuse could spill back towards the refuse collection vehicle damaging the wheels of the refuse collection vehicle.

Another example of a prior art universal refuse collection dumpster is shown in U.S. Patent Publication Number US 2004/0169038 A1 (PICKLER). On a rear wall of the universal refuse collection dumpster, a discharge opening is located which comprises a sealing plate. The discharge opening is located away from a lowermost portion of the rear wall. Thus the universal refuse collection dumpster must be tilted in order to urge the refuse out of the discharge opening. This is disadvantageous as is requires a relatively high amount of energy to tilt the refuse collection dumpster, including the refuse contained therein. As the refuse is discharged through a rear opening, this limits the use of the refuse collection vehicle to refuse collection plants that can accommodate a rearward discharging dumpster.

Yet another prior art example of a refuse collection vehicle is disclosed in German Utility Model Publication Number DE 296 22 808 (ZUNHAMMER). The refuse collection vehicle disclosed comprises a lifting and tipping device for discharging the refuse compartment through an opening in the rear wall of the refuse compartment. A conveyor is provided within the refuse compartment to assist in distributing and moving the refuse contained therein. This suffers from many of the same problems as the above-mentioned prior art.

U.S. Patent Publication Number US 2012/0219394 (STEWART ET AL.) discloses a refuse collection compartment which uses a live-floor module. The live floor module comprises a floor surface, parallel cables laid on the floor surface, a length of conveyor belt laid on the cables, a movable bulkhead and a winch system for moving the belt, the cables and the bulkhead back and forth in unison. The bulkhead is used to urge refuse to discharge from the refuse collection compartment. The cables and the belt are wrapped over different axes for eliminating relative movement between the cables and the belt. There are several disadvantages to such a system including high energy costs as a result of having to push all of the recyclable refuse along the refuse collection compartment. There would also clearly be maintenance and reliability issues surrounding such a system as the potential for recyclable refuse to become wedged beneath the bulkhead is relatively high.

German Utility Model Publication Number DE-U-93 11 235 (MASCHINENBAU KLEMENS HUMMEL GMBH) discloses a recyclable refuse collection vehicle according to the preamble of claim 1, which comprises a chamber which would be suitable for receiving recyclable waste adjacent a front end of the vehicle. The chamber side walls can be opened outwardly for discharge of the waste, and, the chamber itself can be tilted to urge the discharge of the waste. The prior art disclosure mentions that old glass could be received in this chamber. This could be problematic as the location of the chamber is to the front of at least some of the wheels on the vehicle and if the glass is discharged, the wheels of the vehicle may have to drive over the discharged waste glass, or at least portions of discharged glass. This problem is further exacerbated by the open-sided construction of the side wall which opens outwardly to form a chute for the discharge of the recyclable waste. The recyclable waste can easily fall of the side of the chute adjacent to the wheels of the vehicle.
Japanese Patent Publication Number JP-A-06 001 401 (MORITA TOKUSHU KIKO KK) discloses a refuse classifying and collecting vehicle which can classify and collect refuse such as empty bottles. The collected refuse can be subsequently discharged from the vehicle. Along one side of the vehicle there are a number of refuse chambers, each for receiving a different type of refuse. The side walls of each of the chambers can open to allow the refuse to be discharged. The opening side walls are located along the full length of the vehicle and there are no wings on the opening side walls to prevent the refuse being discharged from falling off the edges of the opened side walls. Therefore, this prior art disclosure suffers from the same disadvantages as German Utility Model Publication Number DE-U-93 11 235.

It is a goal of the present invention to provide a recyclable refuse collection vehicle that overcomes at least one of the above mentioned problems.

### Summary of the Invention

The present invention is directed to a recyclable refuse collection vehicle comprising a plurality of refuse storage compartments and at least one recyclable refuse storage compartment; the recyclable refuse storage compartment comprising an upstanding side wall which forms at least a part of a side of the recyclable refuse collection vehicle; the upstanding side wall comprising a refuse receiving opening which is suitable for receiving recyclable refuse and delivering the recyclable refuse to the recyclable refuse storage compartment for storage until the recyclable refuse is to be unloaded from the recyclable refuse storage compartment; the upstanding side wall further comprising a recyclable refuse discharge assembly located below the refuse receiving opening and adjacent a lowermost portion of the upstanding side wall; with, the recyclable refuse storage compartment further comprising a floor and the recyclable refuse discharge assembly comprising a refuse discharge opening and a rotatable plate which is hinged along a lower edge of the refuse discharge opening, with the rotatable plate opening outwardly to form a refuse discharge chute leading from the refuse discharge opening and directing recyclable refuse to be discharged from the recyclable refuse storage compartment along the chute and away from the recyclable refuse collection vehicle.

According to the invention is the floor sloped upwardly away from the recyclable refuse discharge assembly so as to urge recyclable refuse stored in the recyclable refuse storage compartment towards the recyclable refuse discharge assembly, is the recyclable refuse discharge assembly located to a rear of a rearmost wheel on the recyclable refuse collection vehicle and comprises the rotatable plate arc-shaped side wings to prevent any refuse being discharged falling off the side of the rotatable plate.

The advantage of the recyclable refuse unloading assembly comprising the discharge opening and the rotatable plate which opens outwardly to form a refuse discharge chute is that the recyclable refuse is discharged along the chute and away from the recyclable refuse collection vehicle, and in particular away from tyres on the recyclable refuse collection vehicle. This is important so that the recyclable refuse, which could likely include glass, is not discharged in a position whereby the recyclable refuse could puncture or damage the tyres on the recyclable refuse collection vehicle.

In a further embodiment, the rotatable plate is orientated in a substantially vertical plane so as to seal discharge opening when in a closed state; and, the rotatable plate is articulated about its hinge from a substantially vertical plane to an downward sloping angle so as to act as a chute to carry recyclable refuse away from recyclable refuse collection vehicle when in the open state.

In a further embodiment, the rotatable plate comprises a terminating edge which is held at a distance from the wall of the recyclable refuse collection vehicle when the rotatable plate is in the open state, said distance being in the range of 1 metre to 10 cm.

In a further embodiment, the rotatable plate comprises a terminating edge which is held at a distance from the wall of the recyclable refuse collection vehicle when the rotatable plate is in the open state, said distance being the range of 10cm to 60cm, and preferably is approximately 25cm.

In a further embodiment, the driver's cab in the recyclable refuse collection vehicle comprises a weight sensor in a driver's seat and will only allow operation of the recyclable refuse discharge assembly when a weight of at least a predetermined value is sensed by the weight sensor.

In a further embodiment, the operation of the recyclable refuse discharge assembly will only continue for as long as a weight of at least a predetermined value is continued to be sensed by the weight sensor.

In a further embodiment, when in the open state, the rotatable plate of the refuse discharge assembly is rotated to form a reflex angle relative to a horizontal plane. It will be understood that the rotatable plate comprises an inner face over which the recyclable refuse will flow when being discharged from the vehicle, and, an outer face which forms a side of the vehicle when the rotatable plate is in the closed state. The inner face and the outer face may preferably not be in parallel planes relative to one another. For example, the reflex angle, of the inner face of the rotatable plate made relative to the horizontal plane, may be in the range of 20° to 60° and will preferably be approximately 43 degrees. This has been considered to be a particularly effective angle for discharge of the recyclable refuse.

It is noted that the floor of the vehicle may be held at an angle of approximately 27.5° relative to the horizontal plane so as to cause the slope which urges the recyclable refuse stored in the recyclable refuse storage compartment towards the recyclable refuse discharge assembly. An increase in angle will avoid any slow of the refuse as it is discharged from the compartment.

The reflex angle, of the outer face of the rotatable plate made relative to the horizontal plane, may be in the range of 20° to 60° and will preferably be approximately 30 degrees. As can be seen the angle of the outer face may be different to the angle of the inner face and thus the outer face and the inner face may not be in parallel planes relative to one another.

The rotatable plate may turn through approximately 120° of rotation when transitioning from the closed state to the open state.

In a further embodiment, when in the open state, the rotatable plate of the refuse discharge assembly is rotated to form a straight angle, or a reflex angle, relative to the sloped floor of the recyclable refuse collection vehicle.

In a further embodiment, when in the open state, the rotatable plate of the refuse discharge assembly is rotated to form a substantially continuous surface in the same plane with the sloped floor of the recyclable refuse collection vehicle.

In a further embodiment, the recyclable refuse storage compartment comprises a pair of upstanding opposing side walls, with each of the pair of upstanding opposing side walls forming part of one of a pair of opposing sides of the recyclable refuse collection vehicle, respectively; the recyclable refuse storage compartment further comprising a plurality of recyclable refuse discharge assemblies, with at least one of the plurality of recyclable refuse discharge assemblies located adjacent a lowermost portion of each of the pair of opposing sides of the recyclable refuse collection vehicle; and, the recyclable refuse storage compartment further comprising a multi-faceted floor whereby at least one facet of the multi-faceted floor slopes upwardly away from each of the plurality of recyclable refuse discharge assemblies so as to urge recyclable refuse stored in the recyclable refuse storage compartment towards the plurality of recyclable refuse discharge assemblies.

### Detailed Description of Embodiments

The invention will be more clearly understood from the following description of some embodiments thereof, given by way of example only, with reference to the accompanying drawings, in which:
Figure 1 is a perspective view of a recyclable refuse vehicle having a recyclable refuse discharge assembly in accordance with the present invention;
Figure 2 is a perspective detail see-through view of the recyclable refuse discharge assembly of Figure 1, in its opened state;
Figure 3 is a perspective detail see-through view of the recyclable refuse discharge assembly of Figure 1, in its closed state;
Figure 4 is a rear elevation see-through view of the recyclable refuse discharge assembly of Figure 1, in its closed state;
Figure 5 is a rear elevation see-through view of the recyclable refuse discharge assembly of Figure 1, in its opened state; and,
Figure 6 is a perspective detail see-through view of a floor of a recyclable refuse storage compartment of the recyclable refuse discharge assembly of Figure 1.

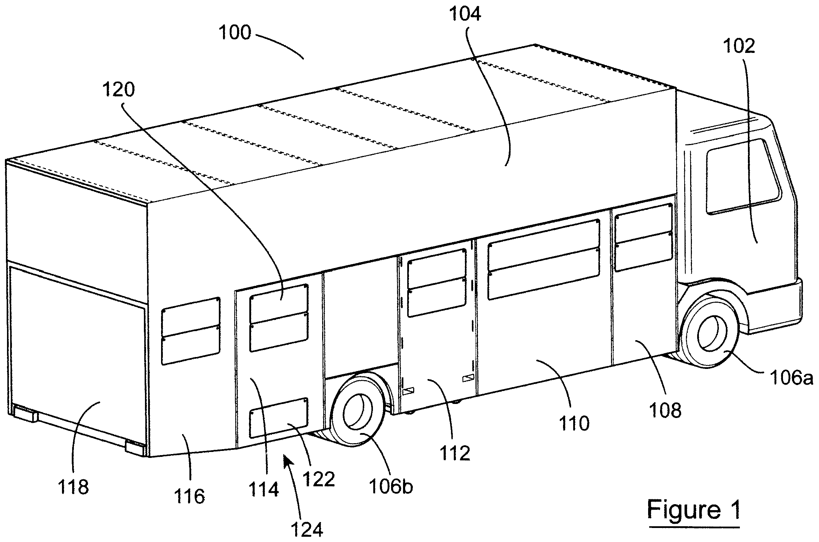

Referring to Figure 1, there is provided a recyclable refuse collection vehicle indicated generally by reference numeral 100. The recyclable refuse collection vehicle 100 comprises a cab 102 and a recyclable refuse collection container 104 mounted on a wheeled chassis, only the wheels 106a, 106b of which are visible. The recyclable refuse collection vehicle 100 comprises a plurality of recyclable refuse storage compartments 108, 110, 112, 114, 116, 118. Each of the recyclable refuse storage compartments 108, 110, 112, 114, 116, 118 may be designated for a different type of recyclable refuse. For example, a recyclable glass refuse storage compartment 114 may be located behind a rearmost wheel 106b of the recyclable refuse collection vehicle 100.

The recyclable glass refuse storage compartment 114 comprises a recyclable glass refuse receiving opening 120 which is suitable for receiving recyclable glass refuse (not shown) and delivering the recyclable glass refuse to the recyclable glass refuse storage compartment 114 for storage until the recyclable glass refuse is to be unloaded, by a discharge action, from the recyclable refuse storage compartment 114. The recyclable glass refuse storage compartment 114 comprises a recyclable glass refuse discharge assembly 122 located adjacent a lowermost portion 124 of a side of the recyclable refuse collection vehicle 100.

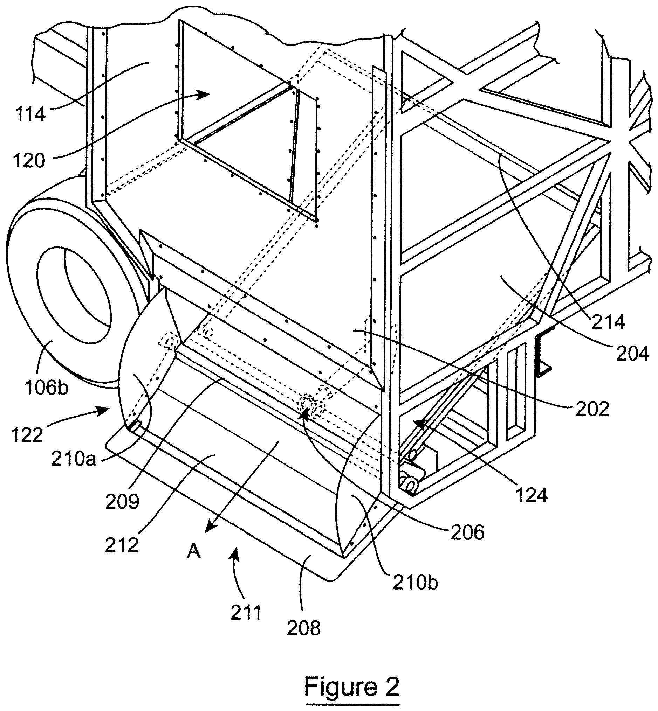

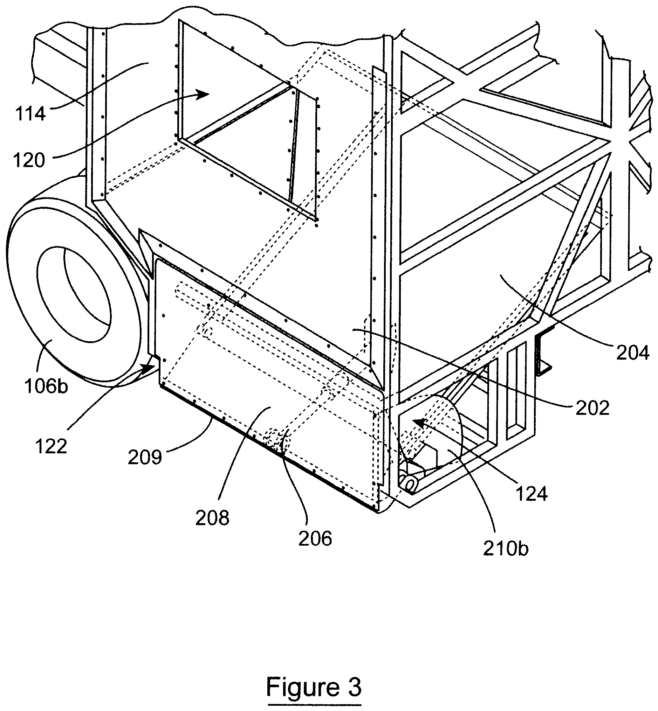

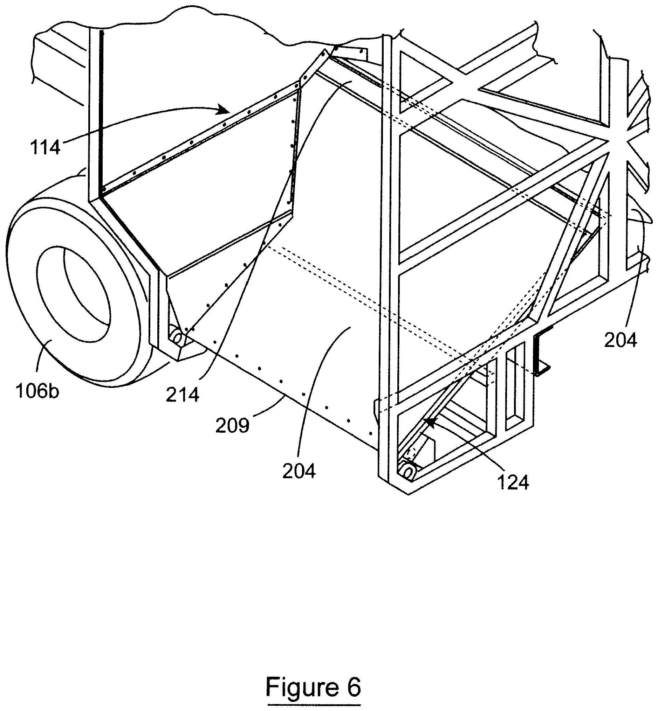

Referring now to Figures 2 to 6 inclusive, the recyclable glass refuse storage compartment 114 comprises an upstanding side wall 202 which forms part of a side of the recyclable refuse collection vehicle 100. The recyclable glass refuse discharge assembly 122 is located adjacent a lowermost portion indicated generally by reference numeral 124 of the upstanding side wall 202. The recyclable glass refuse storage compartment 114 comprises a floor 204 which is sloped upwardly away from the recyclable glass refuse discharge assembly 122 so as to urge recyclable glass refuse (not shown) stored in the recyclable glass refuse storage compartment 114 towards the recyclable glass refuse discharge assembly 122.

The recyclable glass refuse discharge assembly 122 is made of a recyclable glass refuse discharge opening, indicated generally by reference numeral 206, and a rotatably hinged discharge flap, interchangeably referred to as a rotatable plate throughout this specification and accorded reference number 208. The rotatable plate 208 is hinged along a lower edge 209 of the recyclable glass refuse discharge opening 206 so as to open by rotating the rotatable plate outwardly and downwardly from a substantially reflex angle relative to a horizontal plane. Alternatively, when in the open state, it is also envisaged that the rotatable plate 208 of the refuse discharge assembly 122 is rotated to form a straight angle relative to the floor 204 of the recyclable refuse collection vehicle 100. That is to say, when in the open state, the rotatable plate 208 of the refuse discharge assembly 122 is rotated to form a substantially continuous surface in the same plane with the floor 204 of the recyclable refuse collection vehicle 100.

The rotatable plate 208 opens outwardly to form a glass refuse discharge chute, indicated generally by reference numeral 211, having a pair of opposing arc-shaped side wings 210a, 210b and a substantially planer flap plate 212 leading from the recyclable glass refuse storage compartment 114 and the glass refuse discharge chute 211 directing recyclable glass refuse to be discharged from the recyclable glass refuse storage compartment 114 away from the recyclable refuse collection vehicle 100 as indicated by reference arrow A.

It will be understood that a pair of recyclable glass refuse discharge assemblies 122 are located on either side of the recyclable refuse collection vehicle 100 and that the floor 204 may be an inverted vee-shaped floor 204 whereby the inverted vee-shaped floor 204 slopes upwardly away from each of the pair of recyclable refuse discharge assemblies 114 towards a substantially centralised raised floor edge 214.

Alternatively, a plurality of recyclable glass refuse discharge assemblies 122 may be provided on the recyclable refuse collection vehicle 100. A multi-faceted floor would be provided, with at least one of the facets on the multi-faceted floor sloping upwardly away from each of the plurality of recyclable glass refuse discharge assemblies 122. It will be understood that the multi-faceted floor may comprises arcuate faces or substantially planar faces.

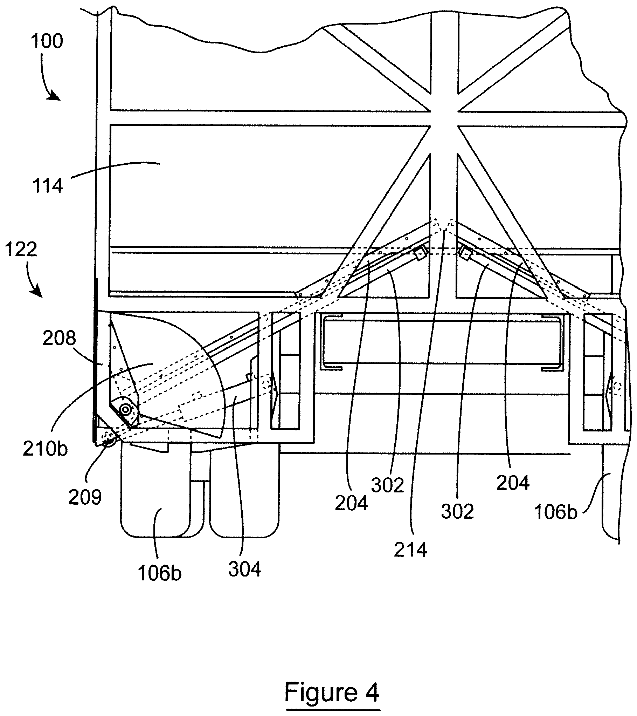

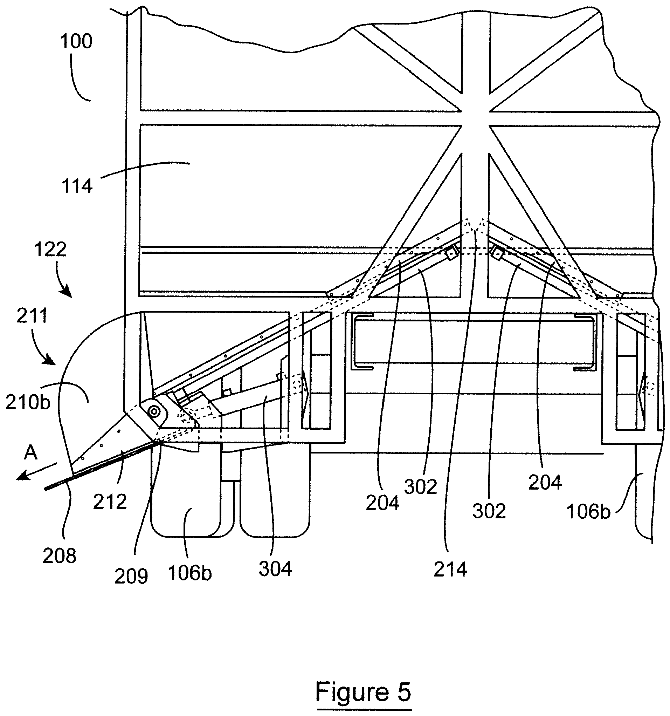

As best seen in Figures 4 and 5 respectively, the floor 204 may be shook by a vibration means 302 to encourage the discharge of recyclable glass refuse (not shown) from the recyclable glass refuse storage compartment 114.

In use, an operator (not shown) will activate a hydraulic means 304 from the cab 102 of the recyclable refuse collection vehicle 100. In this way, the operator will not be subject to any unlawfully high noise levels.

The rotatable plate 208 opens outwardly to form a glass refuse discharge chute 211. The recyclable refuse may flow under gravity due to the sloped nature of the floor 204, or the operator may also employ the vibration means 302 to encourage the discharge of recyclable refuse. The opposing arc-shaped side wings 210a, 210b and a substantially planer flap plate 212 form the glass refuse discharge chute 211 and the chute 211 directs the recyclable refuse to be discharged from the recyclable glass refuse storage compartment 114 away from the recyclable refuse collection vehicle 100, and at least sufficiently far away from the wheel 106b so as not to allow any threat of damage or puncture to the tyre on the wheel 106b.

The operator may choose to drive slowly along a path, forming mounds or trails of discharged recyclable refuse to one or both sides of the recyclable refuse collection vehicle 100. As the discharged recyclable refuse will not necessarily fall into a channel or pit to the side of the recyclable refuse collection vehicle 100, the crux of the invention relates to the location of the recyclable glass refuse discharge assembly 122 and to the form of the rotatable plate 208.

In yet another embodiment of the present invention, it is foreseen that a weight sensor or internal camera may be located in the recyclable glass refuse storage compartment 114 and be used to alert the operator when the recyclable glass refuse storage compartment 114 is substantially empty.

In a further embodiment, the driver's cab 102 in the recyclable refuse collection vehicle 100 may comprise a weight sensor in a driver's seat and a controller (not shown) which will only allow operation of the recyclable refuse discharge assembly 122 when a weight of at least a predetermined value, which may be equivalent to indicated the presence of a human in the driver seat, is sensed by the weight sensor. In a particular embodiment, the operation of the recyclable refuse discharge assembly 122 will only continue for as long as the weight of the predetermined value is continued to be sensed by the weight sensor.

The terms "comprise" and "include", and any variations thereof required for grammatical reasons, are to be considered as interchangeable and accorded the widest possible interpretation.

It will be understood that the components shown in any of the drawings are not necessarily drawn to scale, and, like parts shown in several drawings are designated the same reference numerals.

The invention is not limited to the embodiments hereinbefore described which may be varied in both construction and detail as long as these fall within the scope of the claims.

## Claims

1. A recyclable refuse collection vehicle (100) comprising a plurality of refuse storage compartments (108, 110, 112, 116, 118) and at least one recyclable refuse storage compartment (114);
the recyclable refuse storage compartment (114) comprising an upstanding side wall (202) which forms at least a part of a side of the recyclable refuse collection vehicle (100);
the upstanding side wall (202) comprising a refuse receiving opening (120) which is suitable for receiving recyclable refuse and delivering the recyclable refuse to the recyclable refuse storage compartment (114) for storage until the recyclable refuse is to be unloaded from the recyclable refuse storage compartment (114);
the upstanding side wall (202) further comprising a recyclable refuse discharge assembly (122) located below the refuse receiving opening (120) and adjacent a lowermost portion (124) of the upstanding side wall (202); with the recyclabe refuse discharge assembly comprising a refuse discharge opening (206) and a rotatable plate (208) hinged along a lower edge (209) of the refuse discharge opening (206), the recyclable refuse storage compartment (114) further comprising a floor (204), with the rotatable plate (208) opening outwardly to form a refuse discharge chute (211) leading from the refuse discharge opening (206) and directing recyclable refuse to be discharged from the recyclable refuse storage compartment (114) along the chute (211) and away from the recyclable refuse collection vehicle (100), **characterised in that** the floor (204) is sloped upwardly away from the recyclable refuse discharge assembly (122) so as to urge recyclable refuse stored in the recyclable refuse storage compartment (114) towards the recyclable refuse discharge assembly (122); that the recyclable refuse discharge assembly (122) is located to a rear of a rearmost wheel (106b) on the recyclable refuse collection vehicle (100); and that the rotatable plate (208) comprises arc-shaped side wings (210a, 210b) to prevent any refuse being discharged falling off the side of the rotatable plate (208).

2. The recyclable refuse collection vehicle (100) as claimed in claim 1, wherein, the rotatable plate (208) is orientated in a substantially vertical plane so as to seal the discharge opening (206) when in a closed state;
and, the rotatable plate (208) is articulated about its hinge from a substantially vertical plane to an downward sloping angle so as to act as a chute (211) to carry recyclable refuse away from recyclable refuse collection vehicle (100) when in the open state.

3. The recyclable refuse collection vehicle (100) as claimed in any preceding claim, wherein, the rotatable plate (208) comprises a terminating edge which is held at a distance from the wall of the recyclable refuse collection vehicle (100) when the rotatable plate (208) is in the open state, said distance being in the range of 1 metre to 10 cm.

4. The recyclable refuse collection vehicle (100) as claimed in any preceding claim, wherein, the rotatable plate (208) comprises a terminating edge which is held at a distance from the wall of the recyclable refuse collection vehicle (100) when the rotatable plate (208) is in the open state, said distance being in the range of 10 cm to 60 cm.

5. The recyclable refuse collection vehicle (100) as claimed in any preceding claim, wherein, the driver's cab (102) in the recyclable refuse collection vehicle (100) comprises a weight sensor in a driver's seat and will only allow operation of the recyclable refuse discharge assembly (122) when a weight of at least a predetermined value is sensed by the weight sensor.

6. The recyclable refuse collection vehicle (100) as claimed in claim 5, wherein, the operation of the recyclable refuse discharge assembly (122) will only continue for as long as a weight of at least a predetermined value is continued to be sensed by the weight sensor.

7. The recyclable refuse collection vehicle (100) as claimed in any of claims 4 to 6, wherein, when in the open state, the rotatable plate (208) of the refuse discharge assembly (122) is rotated to form a reflex angle relative to a horizontal plane.

8. The recyclable refuse collection vehicle (100) as claimed in any of claims 4 to 6, wherein, when in the open state, the rotatable plate (208) of the refuse discharge assembly (122) is rotated to form a straight angle, or a reflex angle, relative to the floor (204) of the recyclable refuse collection vehicle (100).

9. The recyclable refuse collection vehicle (100) as claimed in claim 8, wherein, when in the open state, the rotatable plate (208) of the refuse discharge assembly (122) is rotated to form a substantially continuous surface in the same plane with the floor (204) of the recyclable refuse collection vehicle (100).

10. The recyclable refuse collection vehicle (100) as claimed in any preceding claims, wherein, the recyclable refuse storage compartment (114) comprises a pair of upstanding opposing side walls (202), with each of the pair of upstanding opposing side walls (202) forming part of one of a pair of opposing sides of the recyclable refuse collection vehicle (100) respectively; the recyclable refuse storage compartment (114) further comprising a plurality of recyclable refuse discharge assemblies (122), with at least one of the plurality of recyclable refuse discharge assemblies (122) located adjacent a lowermost portion (124) of each of the pair of opposing sides of the recyclable refuse collection vehicle (100) and located to the rear of a rearmost wheel on the recyclable refuse collection vehicle; and,
the recyclable refuse storage compartment (114) further comprising a multi-faceted floor (204) whereby a facet of the multi-faceted floor (204) slopes upwardly away from each of the plurality of recyclable refuse discharge assemblies (122) so as to urge recyclable refuse stored in the recyclable refuse storage compartment (114) towards the plurality of recyclable refuse discharge assemblies (122).

## Patentansprüche

1. Recyclingabfall-Sammelfahrzeug (100), umfassend mehrere Abfallsammelfächer (108, 110, 112, 116, 118) und mindestens ein Recyclingabfall-Sammelfach (114);
wobei das Recyclingabfall-Sammelfach (114) eine aufrechte Seitenwand (202) umfasst, die mindestens einen Teil einer Seite des Recyclingabfall-Sammelfahrzeugs (100) bildet;
wobei die aufrechte Seitenwand (202) eine Abfallaufnahmeöffnung (120) umfasst, die geeignet ist, Recyclingabfall aufzunehmen und den Recyclingabfall dem Recyclingabfall-Sammelfach (114) zur Lagerung zuzuführen, bis der Recyclingabfall aus dem Recyclingabfall-Sammelfach (114) entladen werden soll;
wobei die aufrechte Seitenwand (202) ferner eine Recyclingabfall-Entladeanordnung (122) umfasst, die unterhalb der Abfallaufnahmeöffnung (120) und angrenzend an einen untersten Abschnitt (124) der aufrechten Seitenwand (202) angeordnet ist;
wobei das Recyclingabfall-Sammelfach (114) ferner einen Boden (204) umfasst, wobei der Boden (204) von der Recyclingabfall-Entladeanordnung (122) weg nach oben geneigt ist, um den in dem Recyclingabfall-Sammelfach (114) gelagerten Recyclingabfall in Richtung der Recyclingabfall-Entladeanordnung (122) zu drücken;
**dadurch gekennzeichnet, dass** die Recyclingabfall-Entladeanordnung (122) hinter einem hintersten Rad (106b) des Recyclingabfall-Sammelfahrzeugs (100) angeordnet ist; und dass die Recyclingabfall-Entladeanordnung eine Abfallentladeöffnung (206) und eine drehbare Platte (208) umfasst, die entlang einer Unterkante (209) der Abfallentladeöffnung (206) angelenkt ist, die drehbare Platte (208) bogenförmige Seitenflügel (210a, 210b) umfasst, um zu verhindern, dass Abfall, der entladen wird, an der Seite der drehbaren Platte (208) herunterfällt. wobei sich die drehbare Platte (208) nach außen hin öffnet, um eine Abfall-Entladerutsche (211) zu bilden, die von der AbfallEntladeöffnung (206) ausgeht und Recyclingabfall, der aus dem Recyclingabfall-Sammelfach (114) entladen werden soll, entlang der Rutsche (211) und weg von dem Recyclingabfall-Sammelfahrzeug (100) leitet.

2. Recyclingabfall-Sammelfahrzeug (100) nach Anspruch 1, wobei die drehbare Platte (208) in einer im Wesentlichen vertikalen Ebene derart ausgerichtet ist, dass sie die Entladeöffnung (206) in einem geschlossenen Zustand abdichtet; und,
wobei die drehbare Platte (208) um ihr Scharnier von einer im Wesentlichen vertikalen Ebene in einen abwärts geneigten Winkel gelenkig gelagert ist, so dass sie als Rutsche (211) dient, um Recyclingabfall von einem Recyclingabfall-Sammelfahrzeug (100) weg zu befördern, wenn sie sich im offenen Zustand befindet.

3. Recyclingabfall-Sammelfahrzeug (100) nach einem der vorhergehenden Ansprüche,
wobei die drehbare Platte (208) eine Abschlusskante umfasst, die in einem Abstand von der Wand des Recyclingabfall-Sammelfahrzeugs (100) gehalten wird, wenn sich die drehbare Platte (208) im offenen Zustand befindet, wobei der Abstand im Bereich von 1 Meter bis 10 cm liegt.

4. Recyclingabfall-Sammelfahrzeug (100) nach einem der vorhergehenden Ansprüche,
wobei die drehbare Platte (208) eine Abschlusskante umfasst, die in einem Abstand von der Wand des Recyclingabfall-Sammelfahrzeugs (100) gehalten wird, wenn sich die drehbare Platte (208) im offenen Zustand befindet, wobei der Abstand im Bereich von 10 cm bis 60 cm liegt.

5. Recyclingabfall-Sammelfahrzeug (100) nach einem der vorhergehenden Ansprüche,
wobei die Fahrerkabine (102) in dem Recyclingabfall-Sammelfahrzeug (100) einen in einem Fahrersitz angeordneten Gewichtssensor umfasst und den Betrieb der Recyclingabfall-Entladeanordnung (122) nur dann zulässt, wenn ein Gewicht von mindestens einem vorbestimmten Wert von dem Gewichtssensor erfasst wird.

6. Recyclingabfall-Sammelfahrzeug (100) nach Anspruch 5, wobei der Betrieb der Recyclingabfall-Entladeanordnung (122) nur so lange fortgesetzt wird, wie ein Gewicht von mindestens einem vorbestimmten Wert weiterhin von dem Gewichtssensor erfasst wird.

7. Recyclingabfall-Sammelfahrzeug (100) nach einem der Ansprüche 4 bis 6, wobei die drehbare Platte (208) der Recyclingabfall-Entladeanordnung (122) in geöffnetem Zustand so gedreht wird, dass sie einen Reflexionswinkel relativ zu einer horizontalen Ebene bildet.

8. Recyclingabfall-Sammelfahrzeug (100) nach einem der Ansprüche 4 bis 6, wobei im offenen Zustand die drehbare Platte (208) der Abfall-Entladeanordnung (122) so gedreht wird, dass sie einen geraden Winkel oder einen Reflexionswinkel relativ zum Boden (204) des Recyclingabfall-Sammelfahrzeugs (100) bildet.

9. Recyclingabfall-Sammelfahrzeug (100) nach Anspruch 8, wobei im offenen Zustand die drehbare Platte (208) der Abfall-Entladeanordnung (122) gedreht wird, um eine im Wesentlichen kontinuierliche Oberfläche in derselben Ebene mit dem Boden (204) des Recyclingabfall-Sammelfahrzeugs (100) zu bilden.

10. Recyclingabfall-Sammelfahrzeug (100) nach einem der vorhergehenden Ansprüche, wobei das Recyclingabfall-Sammelfach (114) ein Paar aufrechter, gegenüberliegender Seitenwände (202) umfasst, wobei jede des Paares aufrechter, gegenüberliegender Seitenwände (202) jeweils einen Teil einer von einem Paar gegenüberliegender Seiten des Recyclingabfall-Sammelfahrzeugs (100) bildet;
wobei das Recyclingabfall-Sammelfach (114) ferner mehrere Recyclingabfall-Entladeanordnungen (122) umfasst, wobei mindestens eine der mehreren Recyclingabfall-Entladeanordnungen (122) angrenzend an einen untersten Abschnitt (124) von jeder des Paars gegenüberliegender Seiten des Recyclingabfall-Sammelfahrzeugs (100) und hinter einem hintersten Rad des Recyclingabfall-Sammelfahrzeugs angeordnet ist; und,
wobei das Recyclingabfall-Sammelfach (114) ferner einen mehrfach facettierten Boden (204) umfasst, wobei eine Facette des mehrfach facettierten Bodens (204) nach oben von jeder der mehreren Recyclingabfall-Entladeanordnungen (122) weg geneigt ist, um den in dem Recyclingabfall-Sammelfach (114) gelagerten Recyclingabfall in Richtung der mehreren Recyclingabfall-Entladeanordnungen (122) zu drücken.

## Revendications

1. Véhicule de collecte des déchets recyclables (100) comprenant une pluralité de compartiments de stockage des déchets (108, 110, 112, 116, 118) et au moins un compartiment de stockage des déchets recyclables (114) ;
le compartiment de stockage des déchets recyclables (114) comprenant une paroi latérale verticale (202) qui forme au moins une partie d'un côté du véhicule de collecte des déchets recyclables (100) ;
la paroi latérale verticale (202) comprenant une ouverture de réception des déchets (120) qui convient pour recevoir les déchets recyclables et délivrer les déchets recyclables au compartiment de stockage des déchets recyclables (114) pour le stockage jusqu'à ce que les déchets recyclables doivent être déchargés à partir du compartiment de stockage des déchets recyclables (114) ;
la paroi latérale verticale (202) comprenant en outre un ensemble d'évacuation des déchets recyclables (122) situé sous l'ouverture de réception des déchets (120) et adjacent à une partie la plus basse (124) de la paroi latérale verticale (202) ;
avec le compartiment de stockage des déchets recyclables (114) comprenant en outre un plancher (204), le plancher (204) étant incliné vers le haut à l'écart de l'ensemble d'évacuation des déchets recyclables (122) de sorte à pousser les déchets recyclables stockés dans le compartiment de stockage des déchets recyclables (114) vers l'ensemble d'évacuation des déchets recyclables (122) ;
caractérisé en que l'ensemble d'évacuation des déchets recyclables (122) est situé à l'arrière d'une roue la plus en arrière (106b) sur le véhicule de collecte des déchets recyclables (100) ; et en ce que l'ensemble d'évacuation des déchets recyclables comprend une ouverture d'évacuation des déchets (206) et une plaque rotative (208) articulée le long d'un bord inférieur (209) de l'ouverture d'évacuation des déchets (206), la plaque rotative (208) comprenant des ailes latérales en forme d'arc (210a, 210b) pour empêcher tout déchet déchargé de tomber du côté de la plaque rotative (208). avec la plaque rotative (208) s'ouvrant vers l'extérieur pour former une goulotte d'évacuation des déchets (211) partant de l'ouverture d'évacuation des déchets (206) et dirigeant les déchets recyclables à évacuer du compartiment de stockage des déchets recyclables (114) le long de la goulotte (211) et à l'écart du véhicule de collecte des déchets recyclables (100).

2. Véhicule de collecte des déchets recyclables (100) selon la revendication 1, dans lequel, la plaque rotative (208) est orientée dans un plan sensiblement vertical de manière à sceller l'ouverture de décharge (206) lorsqu'elle est dans un état fermé ; et,
la plaque rotative (208) est articulée autour de sa charnière à partir d'un plan sensiblement vertical à un angle incliné vers le bas de manière à agir comme une goulotte (211) pour transporter les déchets recyclables loin du véhicule de collecte des déchets recyclables (100) lorsqu'elle est à l'état ouvert.

3. Véhicule de collecte des déchets recyclables (100) selon une quelconque revendication précédente, dans lequel la plaque rotative (208) comprend un bord de terminaison qui est maintenu à distance de la paroi du véhicule de collecte des déchets recyclables (100) lorsque la plaque rotative (208) est à l'état ouvert, ladite distance étant comprise entre 1 mètre et 10 cm.

4. Véhicule de collecte des déchets recyclables (100) selon une quelconque revendication précédente, dans lequel la plaque rotative (208) comprend un bord de terminaison qui est maintenu à distance de la paroi du véhicule de collecte des déchets recyclables (100) lorsque la plaque rotative (208) est à l'état ouvert, ladite distance étant comprise entre 10 cm et 60 cm.

5. Véhicule de collecte des déchets recyclables (100) selon une quelconque revendication précédente, dans lequel la cabine du conducteur (102) du véhicule de collecte des déchets recyclables (100) comprend un capteur de poids situé dans le siège du conducteur et permettra uniquement le fonctionnement de l'ensemble d'évacuation des déchets recyclables (122) lorsqu'un poids d'au moins une valeur prédéterminée est détecté par le capteur de poids.

6. Véhicule de collecte des déchets recyclables (100) selon la revendication 5, dans lequel le fonctionnement de l'ensemble d'évacuation des déchets recyclables (122) ne se poursuivra que tant qu'un poids d'au moins une valeur prédéterminée continuera d'être détecté par le capteur de poids.

7. Véhicule de collecte des déchets recyclables (100) selon l'une quelconque des revendications 4 à 6, dans lequel, lorsqu'elle est à l'état ouvert, la plaque rotative (208) de l'ensemble d'évacuation des déchets (122) est tournée pour former un angle de réflexion par rapport à un plan horizontal.

8. Véhicule de collecte des déchets recyclables (100) selon l'une quelconque des revendications 4 à 6, dans lequel, lorsqu'elle est à l'état ouvert, la plaque rotative (208) de l'ensemble d'évacuation des déchets (122) est tournée pour former un angle droit ou un angle de réflexion par rapport au plancher (204) du véhicule de collecte des déchets recyclables (100).

9. Véhicule de collecte des déchets recyclables (100) selon la revendication 8, dans lequel, lorsqu'elle est à l'état ouvert, la plaque rotative (208) de l'ensemble d'évacuation des déchets (122) est tournée pour former une surface sensiblement continue dans le même plan avec le plancher (204) du véhicule de collecte des déchets recyclables (100).

10. Véhicule de collecte des déchets recyclables (100) selon l'une quelconque des revendications précédentes, dans lequel, le compartiment de stockage des déchets recyclables (114) comprend une paire de parois latérales verticales opposées (202), chacune de la paire de parois latérales verticales opposées (202) faisant partie de l'une d'une paire de côtés opposés du véhicule de collecte des déchets recyclables (100) respectivement ;
le compartiment de stockage des déchets recyclables (114) comprenant en outre une pluralité d'ensembles d'évacuation des déchets recyclables (122), avec au moins l'une de la pluralité d'ensembles d'évacuation des déchets recyclables (122) située à côté d'une partie la plus basse (124) de chacun de la paire des côtés opposés du véhicule de collecte des déchets recyclables (100) et située à l'arrière d'une roue la plus en arrière sur le véhicule de collecte des déchets recyclables ; et,
le compartiment de stockage des déchets recyclables (114) comprenant en outre un plancher à multiples facettes (204) par lequel une facette du plancher à multiples facettes (204) s'incline vers le haut à l'écart de chacun de la pluralité d'ensembles d'évacuation de déchets recyclables (122) de manière à pousser les déchets recyclables stockés dans le compartiment de stockage des déchets recyclables (114) vers la pluralité d'ensembles d'évacuation des déchets recyclables (122).
